# EUROPEAN PATENT SPECIFICATION

(11) **EP 0 216 462 B1**
(45) Date of publication and mention of the grant of the patent: **26.05.1993**
(21) Application number: 86305611.5
(22) Date of filing: 22.07.1986
(51) Int. Cl.: H04N 1/40

(54) **An apparatus for generating an image from a digital video signal**
Gerät zur Erzeugung eines Bildes aus einem digitalen Videosignal
Appareil pour la génération d'une image d'un signal vidéo numérique

(30) Priority: 15.08.1985 US 765938
(43) Date of publication of application: 01.04.1987
(60) Divisional application: 92200330.6
(73) Proprietor: CANON KABUSHIKI KAISHA, Tokyo (JP)
(72) Inventor: Riseman, John Hugh, deceased (US); Smith, John Jacobs, Cambridge Massachusetts 02140 (US); d'Entremont, Alice Marie, Boston Massachusetts 02109 (US); Goldman, Craig Edward, Natick Massachusetts 01760 (US)
(74) Representative: Beresford, Keith Denis Lewis

(56) References cited:
- US-A- 3 643 016
- US-A- 3 916 096
- US-A- 3 965 290
- US-A- 4 040 094
- US-A- 4 329 717

## Description

The present invention relates to an apparatus and a method for processing image data and for generating a pulse modulated signal for a print engine arranged to generate a series of successive scan lines.

Methods generally referred to as the dither method and the density pattern method are known for reproducing images of half tones. However, these known methods cannot provide satisfactory gradation of dot size when the size of the threshold dot matrix is small, therefore they require the use of large threshold matrices. This in turn reduces the resolution and undesirably allows the texture of the image to appear too dsitinctive due to the periodic structure of the matrix. Therefore, there results a deterioration in the quality of the output images.

In order to mitigate the above described problems, it has been proposed to modify the dither method so as to allow finer control of the dot size by the use of a plurality of dither matrices. This method, however, requires a complicated circuit arrangement for obtaining synchronism of operation between the dither matrices so that the system as a whole is large in size, complicated in construction, and slow. Thus, there is a practical limit in the incremental increase of dot size and the resultant increment of density available by the use of a plurality of dither matrices. In U.S. Patent No. US-A-3,916,096, a method of improving the conventional screening process is described. As set forth in this U.S. Patent No. 3,916,096, at column 8, lines 19 through 31:
The conventional screening process when applied to a scanned image can be regarded as a form of pulse-width-modulation whereby a line of length X is laid down and repeated at intervals of Y. The percentage transmission (or reflection) of the reproduced image is then Y - X/Y [sic. should read (Y-X)/Y]. To be a linear process (Y - X) must be directly proportional to the amplitude of the scanned video signal where the signal amplitude represents the percentage optical transmission of the recorded original image. A way of achieving this is by comparing the amplitude of the video signal with a sawtooth wave form and laying a line forming a portion of a dot whenever the sawtooth is larger than the video signal.

See also U.S. Patent No. US-A-4,040,094, which relates to similar subject matter.

However, even if the method described in this patent is used in an apparatus for reproduction of an image, the precision of gradation reproduction deteriorates due to the delay of response of the apparatus.

The conventional method described in U.S. Patent No. US-A-3,916,096, produces a linear mapping from the analog video signal to the pulse-width-modulated signal. As is known in the art of printing, this linear mapping does not produce acceptable results because of the non-linear distortions introduced in the half-tone printing process, in particular when used with a laser beam print engine. Therefore, to obtain high quality half-tone printing, a method of non-linear mapping must be found. And, the method disclosed in the noted U.S. Patent, as quoted above, uses a complex arrangement to allow the use of different sawtooth waveforms on successive scans.

US-A-3965290 discloses a video-to-binary conversion apparatus for use in image reproduction systems to convert an input video signal to an output binary signal. The purpose of this system is to provide a data conversion circuit which electronically adapts itself to the input data so as to avoid making signal conversion errors which usually give rise to moire degradation in the reproduced image. This is achieved by the continuous modification of an input data state determinining threshold level so as to account for detected data which would otherwise fall below an arbitrarily set reference level and would thus go undetected. More particularly, means are provided for continuously determining the difference between an input video signal and a normalised output

The invention is as set out in the claims.

Accordingly, an object of the present invention is to provide an image processing apparatus, for generating an image from a digital video signal, that can overcome the problems of the prior art described above.

Another object of the present invention is to provide an image processing apparatus, for generating an image from a digital video signal, that permits reproduction of images with high quality.

Still another object of the present invention is to provide an image processing apparatus, for generating an image from a digital video signal, that can provide, with a very simple arrangement, a superior quality half-tone image.

According to a first aspect of the present invention, there is provided apparatus for processing image data and for generating a pulse modulated signal for a print engine arranged to generate a series of successive scan lines, comprising pulse generating means for generating a pulse width modulated signal in response to digital image data, wherein said digital image data ranges between maximum values; characterised in that said pulse generating means generates a pulse width modulated signal having respective predetermined non-zero pulse periods and zero pulse periods, said periods being of non-zero duration, said digital input signal representing the video signal (F) is either at its minimum value or at its maximum value.

Thus, in accordance with said first aspect, the laser is pulsed for each pixel, such that, for the duration of each pixel, the laser neither remains permanently on nor permanently off.

According to a second aspect of the present invention, there is provided a method of processing image data to produce a pulse modulated signal for a print engine arranged to generate a series of successive scan lines; comprising the steps of generating a pulse width modulated signal in response to digital image data, wherein said digital image data ranges between minimum and maximum values; characterised in that said pulse width modulated signal has non-zero pulse periods and zero pulse periods, said periods being of non-zero duration, when said digital input data signal is either at its minimum value or at its maximum value.

The invention will now be described by way of example only, with reference to the accompanying drawings, in which:
Fig. 1 is a simplified schematic illustration of a preferred embodiment of the apparatus for generating an image from a digital video signal in accordance with the present invention;
Fig. 2 showns waveforms of signals obtained at different portions of the apparatus for generating an image from a digital video signal shown in Fig. 1.
Fig. 3 shows how Figs. 3A and 3B are assembled together to illustrate details of the embodiment of the apparatus for generating an image from a digital video signal shown in Fig. 1;
Fig. 4 is a schematic illustration of an optical scanning system in a laser beam printer to which the invention is applicable;
Fig. 5 shows waveforms of signals obtained at different portions of the circuit shown in Figs. 3A and 3B;
Fig. 6 is an illustration of triangular wave signals formed in the circuit shown in Figs. 3A and 3B;
Figs. 7(a) to 7(c) are illustrations of how triangular wave signals may be adjusted in the embodiment of the invention;
Fig. 8 is an illustration of a look-up table of a gamma converting ROM 12;
Fig. 9 is a diagram showing the relationship between input video signals and converted video signals;
Figs. 10(a) and 10(b) illustrate the relationship between the scanning lines and the conversion table as used;
Fig. 11 is a circuit diagram of a circuit for causing phase shift of triangular wave signals between lines;
Fig. 12 is an illustration of triangular wave signals appearing in respective lines at different phases; and
Fig. 13 is an illustration of another embodiment of the invention.

A preferred embodiment of the invention will be described in detail herein with reference to the accompanying drawing.

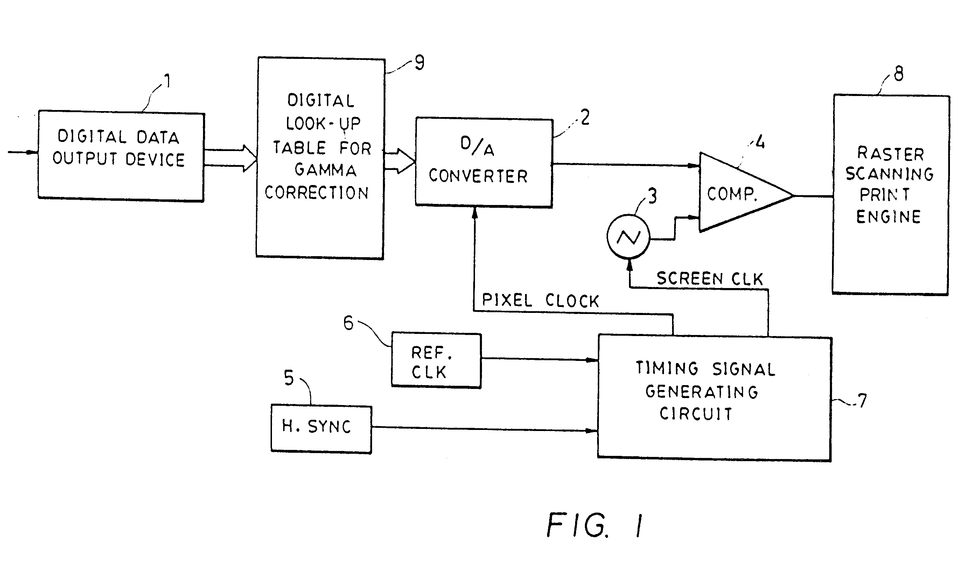

Referring first to Fig. 1 schematically showing an embodiment of the invention, a digital data output device 1 is adapted to receive an analog video data from a CCD sensor or a video camera (neither of which is shown) and to perform an A/D (analog-to-digital) conversion of the analog video signal so as to convert that signal into a digital video signal, where each picture element (pixel) is represented by a predetermined number of bits carrying tone information. The digital video signal may be temporarily stored in a memory or, alternatively, may be supplied from an external device by, for example, telecommunication. The signal from the digital data output device 1 is used as the address for a digital look-up table for gamma correction 9. The resultant output, which in the preferred embodiment is an eight (8) bit digital number ranging from 00H to FFH representing 256 possible tonal gradation levels as described further below, is converted back into an analog signal by means of a D/A (digital to analog) converter 2 so as to form an analog signal which is updated for each picture element. The analog video signal representing the picture elements is fed to one of the input terminals of a comparator circuit 4. Simultaneously, analog reference pattern signals having a triangular waveform are produced by a pattern signal generator 3 at a period corresponding to the desired pitch of the half-tone screen. The pattern signals (a triangle wave) are fed to the other input terminal of the comparator circuit 4. Meanwhile a horizontal synchronizing signal generating circuit 5 generates horizontal synchronizing signals for respective lines, while an oscillator (reference clock generating circuit) 6 generates reference clocks. In synchronism with the horizontal synchronizing signal, a timing signal generating circuit 7 counts down the reference clocks, to, for example, 1/4 period. The signal derived from the timing signal generating circuit 7 is used as the clock for the transfer of the digital video signal and also as the latch timing signal for the D/A converter 2.

In the embodiment described, since the apparatus is intended for use in a laser beam printer, the horizontal synchronizing signal corresponds to a beam detect (BD) signal which is known per se. The comparator circuit 4 compares the level of the analog video signal with the level of the pattern signal of triangular waveform and produces a pulse-width-modulated signal. The pulse-width-modulated signal is supplied to, for example, the laser modulator circuit of a raster scanning print engine 8 for modulating the laser beam. As a result, the laser beam is turned on and off in accordance with the pulse width thereby forming a half-tone image on the recording medium of the raster scanning print engine 8.

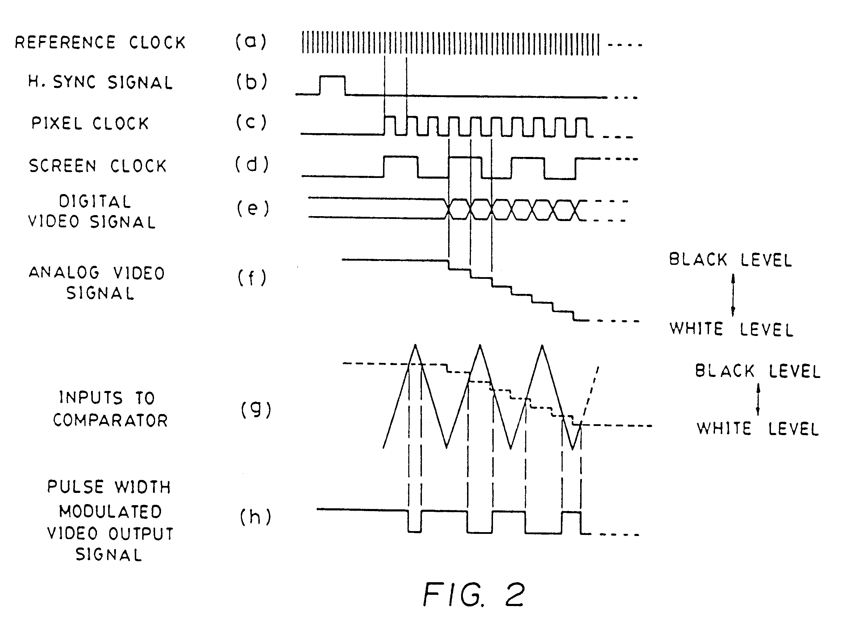

Fig. 2 shows the waveforms of signals obtained in certain components of the apparatus shown in Fig. 1. More specifically, the portion (a) of Fig. 2 diagrammatically shows the reference clocks generated by the oscillator 6, while the portion (b) shows the horizontal synchronizing signal mentioned above. The portion (c) shows the pixel clocks which are produced by counting down the reference clocks with the timing signal generating circuit 7. More specifically, the pixel clock shown in the portion (c) of Fig. 2 is the signal which is obtained by counting down the reference clocks into 1/4 period by the operation of the timing signal generating circuit 7 in synchronism with the horizontal synchronizing signal. The pixel clock thus obtained is delivered to the D/A converter 2 to be used as the digital video signal transfer clock. The portion (d) of Fig. 2 shows the pattern signal synchronizing clock (screen clock) which is obtained by counting down the reference clock into 1/12 period by operation of the timing signal generating circuit 7 in synchronism with the horizontal synchronizing signal. In the illustrated case, one pattern signal synchronizing clock is generated for every three pixel clocks. The pattern signal synchronizing or screen clock thus obtained is delivered to the pattern signal generator 3 to be used as the synchronizing signal in the generation of the pattern signal. The portion (e) of Fig. 2 shows the digital video signal which is output from the digital data output device 2. And the portion (f) shows the analog video signal after the D/A conversion conducted by the D/A converter 2. It will be seen from the portions of Fig. 2 that picture element data of analog level are produced in synchronism with the pixel clocks. It will also be seen that the density of image becomes higher, i.e., approaches black, as the level of the analog video signal rises.

As shown by a solid line curve in the portion (g) of Fig. 2, the output from the pattern generator 3 is obtained in synchronism with the clocks shown in the portion (d) and is input to the comparator circuit 4. The broken line curve in the portion (g) of Fig. 2 shows the analog video signal shown in the portion (f). This video signal is compared by the comparator circuit 4 with the pattern signal of triangular waveform derived from the pattern signal generator 3 so that the analog video signal is converted into a pulse-width-modulated signal as shown in the portion (h) of Fig. 2.

The described embodiment of the invention permits a substantially continuous or linear pulse modulation and, hence, ensures a high gradation of the image output by virtue of the fact that the digital video signal is converted into an analog video signal which is then compared with the triangular wave signal of a predetermined period.

It is to be noted also that, in the described embodiment of the invention, the pattern signal synchronizing clock (screen clock) for generation of the pattern signal, e.g., the triangular wave signal, is generated in synchronism with the horizontal synchronizing signal by making use of reference clocks having a frequency much higher than that of the pattern signal synchronizing signal. Therefore, the jitter of the pattern signal derived from the pattern signal generator 3, e.g., the offset of the pattern signal from one scan line to the next, is reduced to less than 1/12 of the period of the pattern signal. This precision is required to insure a high quality half-tone reproduction in which the line screen is formed uniformly and smoothly from one scan line to the next. Therefore, the density information can be accurately pulse-width-modulated by making use of this pattern signal which has a small fluctuation, so that the image can be reproduced with high quality.

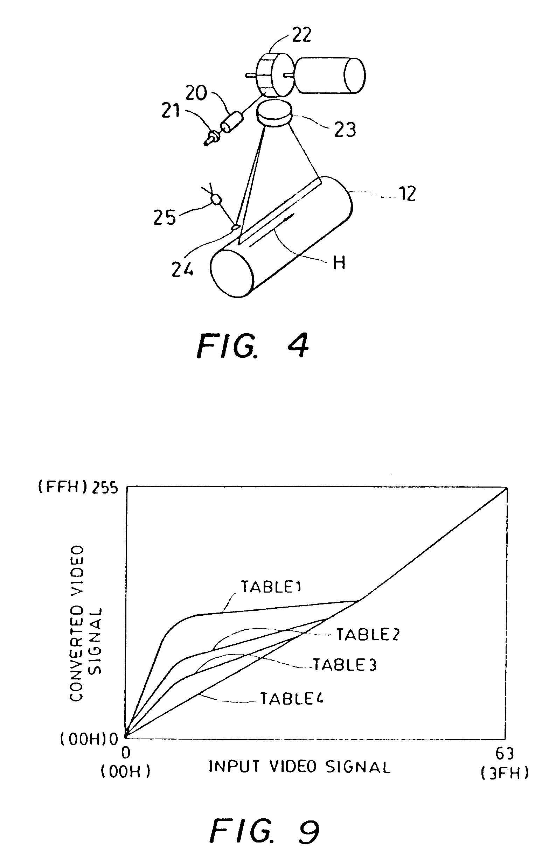

Fig. 4 is a schematic perspective view of the optical scanning system incorporated in the laser beam printer (a raster scanning print engine) to which the present invention is applied. The scanning system has a semiconductor laser adapted to emit a laser beam modulated in accordance with the pulse-width-modulated signal mentioned above.

The optical laser beam modulated by the semiconductor laser 21 is collimated by a collimator lens 20 and is optically deflected by a polygonal mirror (applying means) 22 having a plurality of reflecting surfaces. The deflected beam is focused to form an image on a photosensitive drum 12 by an image forming lens 23 referred to an f- lens, so as to scan the drum 12. During the scanning by the beam, and when the beam reaches the end of each scanning line, it is reflected by a mirror 24 and is directed to a beam detector 25. The beam detection (BD) signal produced by the beam detector 25 is used as the horizontal synchronizing signal as is known. Thus, in the described embodiment, the horizontal synchronizing signal is constituted by the BD signal.

It will be seen that the BD signal is detected for each of the lines of scanning by the laser beam and is used as the timing signal for the transmission of the pulse-width-modulated signal to the semiconductor laser.

As used in the subject specification in description of the preferred embodiments and as used in the concluding claims, the term "line-segment" means a dot which is formed on a recording medium, the length (size) of which is variable in accordance with the width of the pulse width in the supplied pulse-width-modulated signal.

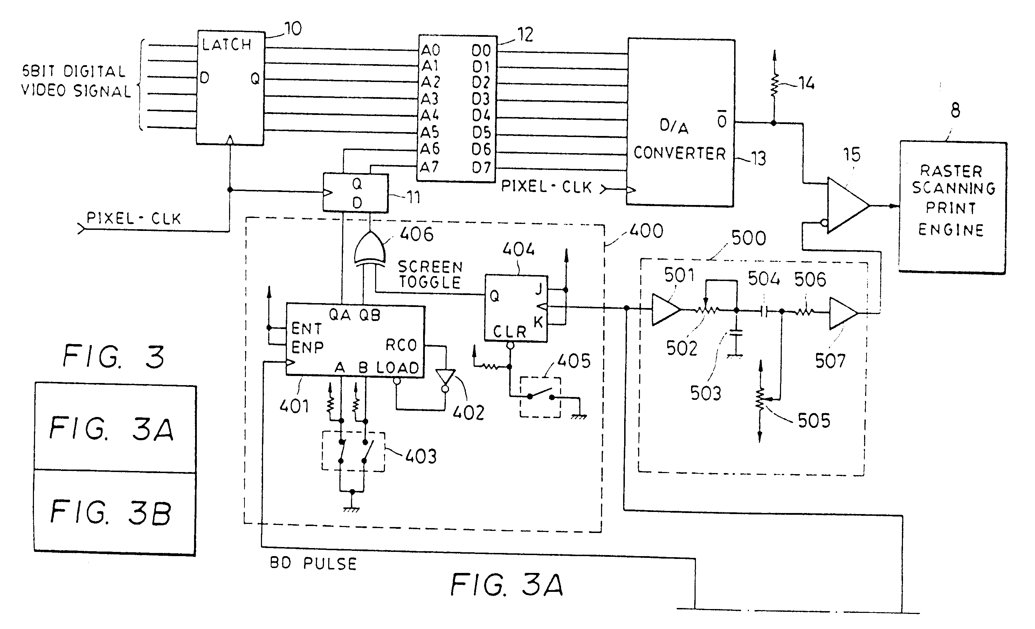

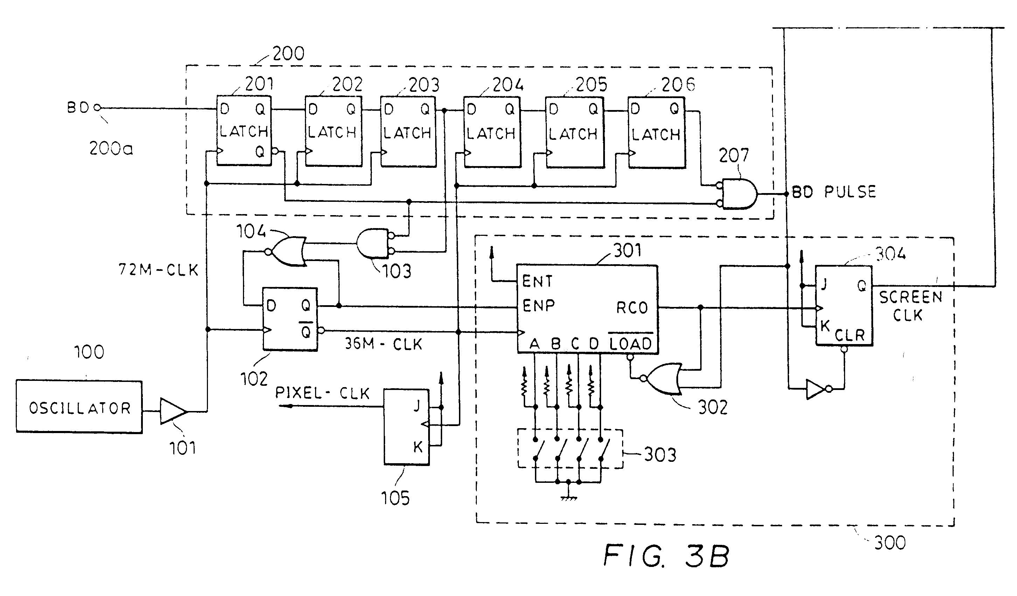

The apparatus for generating an image from a digital video signal of the invention will be described more fully with specific reference to Figs. 3A and 3B which show details of the apparatus shown in Fig. 1.

As stated before, the preferred embodiment described herein makes use of the BD signal as the horizontal synchronizing signal. The BD signal, however, is basically asynchronous with the pixel clock and, therefore, would normally cause jitter in the horizontal direction. In the described embodiment, therefore, jitter is reduced to less than 1/4 of the width of a pixel, by making use of an oscillator 100 that can produce reference clocks (72M-CLK) (72 megahertz clock) of a frequency which is 4 times higher than that of the pixel clocks. A BD synchronizing circuit 200 is used for this purpose. The reference clock (72M-CLK) from the oscillator 100 is supplied to D latches 201, 202, and 203 through a buffer 101, while the BD signal is input to the data terminal D of the D latch 201 through a terminal 200a so as to be synchronized with the reference clocks. In addition, the BD signal is delayed by the D latches 202 and 203 by an amount corresponding to 2 (two) reference clock pulses. The BD signal thus delayed is delivered to one of the input terminals of a NOR gate 103, while the other input terminal of the NOR gate 103 receives the inverted output of the D latch 201. The output from the NOR gate 103 is input to one of the input terminals of a NOR gate 104, while the other input terminal of the NOR gate 104 receives the output of a flip-flop circuit 102.

With this arrangement, the flip-flop circuit 102 produces clocks (36M-CLK) (36 megahertz clock) which are obtained by dividing the frequency of the reference clock by 2 (two). Thus, the output (36M-CLK) from the flip-flop circuit 102 is synchronous with the BD signal to within one period of the clock 72M-CLK.

The output of the D latch 203 is delayed by the D latches 204, 205, and 206 by an amount corresponding to 3 (three) pulses of the output (36M-CLK) of the flip-flop circuit 102.

The inverted output from the D latch 201 and the output from the D latch 206 are delivered to a NOR gate 207, so that an internal horizontal synchronizing signal (BD-Pulse) is formed in synchronism (within one period) with the reference clock.

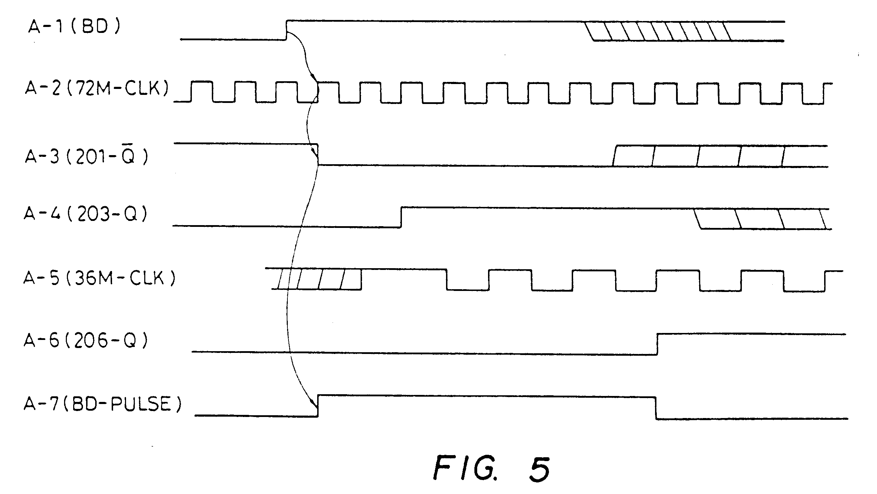

Fig. 5 shows the timing of the signals obtained at various portions of the BD synchronizing circuit 200. More specifically, A-1 shows the BD signal , A-2 shows the reference clock (72M-CLK) produced by the oscillator 100, and A-3 shows the inverted output from the D latch 201, obtained by synchronizing the BD signal with the reference clock (72M-CLK). A-4 shows the output from the D latch 203, obtained by delaying the signal A-3 by an amount corresponding to 2 (two) reference clock pulses. A-5 shows the clock (36M-CLK) output from the flip-flop circuit 102, A-6 shows the output from the D latch 206, obtained by delaying the signal A-4 by an amount corresponding to 3 (three) pulses of the clocks (36M-CLK), and A-7 shows the internal horizontal synchronizing (BD-Pulse). It will be seen that the internal horizontal synchronizing signal (BD-Pulse) rises in synchronism with the rise of the first reference clock (72M-CLK) after the rise of the BD signal, and is held at level "1" for a period corresponding to 8 (eight) pulses of the reference clock. This internal horizontal synchronizing signal (BD-Pulse) constitutes the reference for the horizontal driving of the circuit of this embodiment.

An explanation of the video signals will now be made again with reference to Figs. 3A and 3B. The pixel clocks (PIXEL-CLK) are formed by dividing the frequency of the signal (36M-CLK) by 2 (two) by means of the J-K flip-flop circuit 105. A 6-bit digital video signal is latched in the D latch 10 by the pixel clock (PIXEL-CLK), and the output is delivered to a ROM 12 for gamma conversion. The 8-bit video signal produced through the conversion by the ROM 12 is further converted into an analog signal by the D/A converter 13 and is delivered to one of the input terminals of the comparator 15 in order to be compared with the triangular wave signal explained below. The pulse-width-modulated signal obtained as a result of the comparison is delivered to the laser driver of a raster scanning print engine.

Still referring to Figs. 3A and 3B, reference numeral 300 designates a screen clock generating circuit which generates the screen clock, i.e., the analog reference pattern signal synchronizing clock, which is used as the reference for the generation of the triangular wave signal. A counter 301 is used as a frequency divider for dividing the frequency of the signal (36M-CLK) output from the flip-flop circuit 102. The counter 301 has input terminals D, C, B, and A which are preset with predetermined data by means of a switch 303. The ratio of the frequency division is determined by the values set at these input terminals D, C, B, and A. For instance, when the values "1", "1", "0", and "1" are set in the terminals D, C, B, and A, respectively, the frequency of the signal (36M-CLK) is divided into 1/3.

Meanwhile, horizontal synchronization is attained by the NOR gate 302 and the (BD-Pulse) signal. The frequency of the divided signal is further divided into 1/2 by a J-K flip-flop circuit 304, so that a screen clock having a duty ratio of 50% is formed. A triangular wave generating circuit 500 generates triangular waves by using this screen clock as the reference.

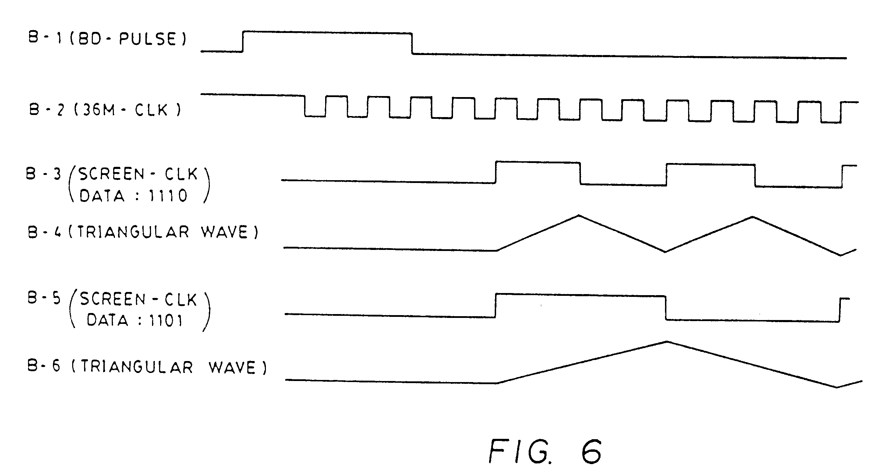

Fig. 6 shows waveforms of signals appearing at various components of the screen clock generating circuit 300. (It is noted, however, that the scales of Figs. 5 and 6 are different). More specifically, B-1 shows the internal synchronizing signal (BD-PULSE), B-2 shows the signal (36M-CLK) and B-3 shows the screen clock (SCREEN CLK) as obtained when values "1", "1", "1", "0" are set in the terminals D, C, B, A of the counter 301, respectively. B-4 represents the triangular wave signal as obtained when the screen clock B-3 is used as the reference. On the other hand, B-5 shows the screen clock (SCREEN CLK) as obtained when values "1", "1", "0", "1" are set in the input terminals D, C, B, A of the counter 301. B-6 shows the triangular wave signal as obtained when the screen clock (SCREEN CLK) shown in B-5 is used as the reference obtained. It will be seen that the period of the triangular wave signal shown by B-4 corresponds to 2 (two) picture elements, while the period of the triangular wave signal shown by B-6 corresponds to 4 (four) picture elements. Thus, the period of the triangular wave signal can be varied as desired by appropriately setting the switch 303. In the embodiment described, the period of the triangular wave is changeable between a duration corresponding to 1 (one) picture element and a duration corresponding to 16 (sixteen) picture elements.

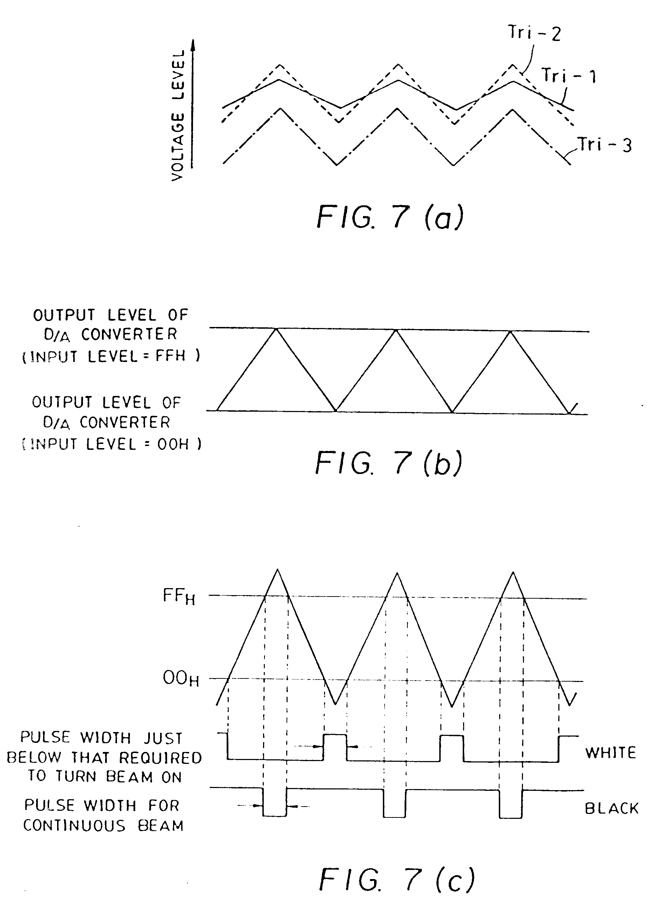

The triangular wave signal generating circuit 500 will now be described, again with reference to Figs. 3A and 3B. The screen clock (SCREEN CLK) is received by the buffer 501, and the triangular wave is generated by an integrator comprising a variable resistor 502 and a capacitor 503. The triangular wave signal is then delivered to one of the input terminals of the comparator 15 through a capacitor 504, a protective resistor 506, and a buffer amplifier 507. The triangular wave signal generating circuit 500 has two variable resistors, namely, variable resistor 502 for adjusting the amplitude of the triangular wave signal, and a variable resistor 505 for adjusting the bias or offset of the triangular wave signal. The adjustment of the amplitude and the offset of the triangular wave signal by the variable resistors 502 and 505 is conducted in a manner which will be explained with reference to Figs. 7(a) to 7(c). In Fig. 7(a), a triangular wave signal Tri-1 before adjustment is shown by a solid line curve. By adjusting the variable resistor 502, the signal Tri-1 is changed into an amplified triangular wave signal Tri-2 shown by a broken line curve. Then, the variable resistor 505 can be adjusted to shift or adjust the offset of the wave so as to form a triangular wave signal Tri-3 shown by a one-dot-and-one-dash line curve. It is thus possible to obtain a triangular wave signal having the desired amplitude and offset.

As stated before, the triangular wave signal thus formed is compared by the comparator 15 with the output of the D/A converter 13, i.e., with the analog video signal. The relationship between the triangular wave signal and the analog video signal is preferably such that the maximum level of the triangular wave equals the level of the output of the D/A converter 13 as obtained when the input to the converter 13 has the maximum level (FFH, where H indicates a hexidecimal number), while the minimum value of the triangular wave signal equals the level of the output of the D/A converter 13 as obtained when the input to this converter has the minimum level (00H). Since the amplitude and the offset of the triangular wave can be controlled as desired, it is possible to obtain this preferred condition without difficulty.

More particularly, according to the invention, the amplitude and the offset of the triangular wave signal are adjusted in the following manner. In general, a laser driver for emitting a laser beam has a certain delay time in its operation. The delay time until the laser beam is actually emitted is further increased due to the beam emitting characteristics of the laser. Therefore, the laser does not start emitting the laser beam until the width of the pulse input to the driver exceeds a predetermined value. This means that, in the case where the input signal is a series of periodic pulses as in the case of the described embodiment, the laser does not emit a beam unless the input signal pulse has a duty ratio greater than a predetermined value. Conversely, when the duty ratio of the pulse is increased beyond a certain level, i.e., when the period of low level of the pulse is shortened, the laser tends to stay on, that is, the beam is continuously emitted. For these reasons, if the adjustment of the triangular wave signal is conducted in the manner shown in Fig. 7(b), the gradation levels around the minimum level (00H) and near the maximum level (FFH) are omitted from the 256 gradation levels of the input data which may be input to the D/A converter 13, so that the gradation deteriorates undesirably. In the embodiment described, therefore, the variable resistors 502 and 505 are adjusted so that the pulse width just below that which will cause the laser to begin emission is obtained at the 00H level of the data input to the D/A converter 13, and so that the pulse width which will render the laser continuously on is obtained at the FFH level of the data input to the D/A converter 13. This manner of adjustment of the variable resistors 502 and 505 is shown in Fig. 7(c).

As will be understood from Fig. 7(c), this preferred embodiment is designed so that the comparator 15 produces an output pulse of a certain pulse width (a pulse width just below that which will cause the laser to begin emission) when the minimum input data 00H is supplied to the D/A converter 13. The preferred embodiment is also designed so that, when the maximum input data FFH is supplied to the D/A converter 13, the comparator produces output pulses the duty ratio of which is not 100% but which is large enough to allow the laser to emit the beam continuously. This arrangement permits the emission time of the laser to vary nearly over the entire range of the 256 gradation levels of the input data, thus ensuring high gradation of the reproduced image.

It should be understood that the method described above is not limited to a laser printer but may also be utilized in to an ink jet printer, a thermal printer or other raster scanning devices.

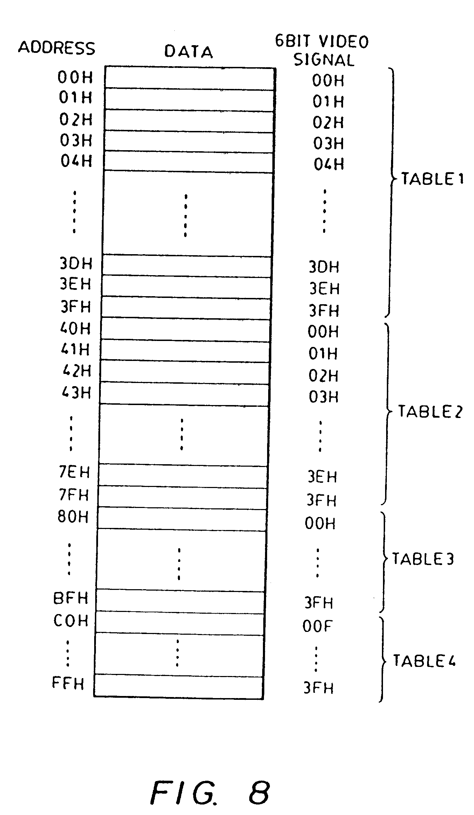

The ROM 12 for gamma conversion will now be explained in detail with reference to Fig. 8. The ROM 12 is provided to allow a high gradation of density in the reproduced image. Although the described embodiment employs a ROM having a capacity of 256 bytes as ROM 12, a capacity of 64 bytes is basically enough because the input digital video signal is a 6-bit signal. Fig. 8 shows the memory map of the ROM 12 for gamma conversion. Since this ROM has a capacity of 256 bytes, it can contain 4 (four) separate correction tables, namely TABLE-1 including addresses 00H to 3FH, TABLE-2 including addresses 40H to 7FH, TABLE-3 including addresses 80H to BFH, and TABLE-4 including the addresses COH to FFH.

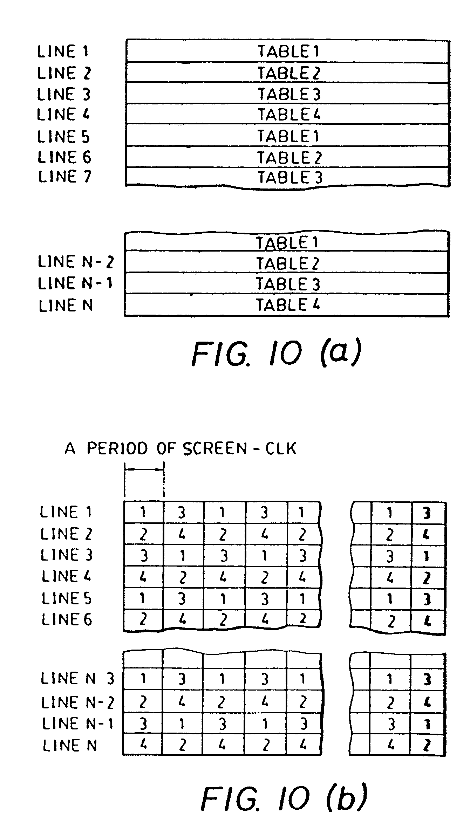

Fig. 9 shows a practical example of the input-output characteristics of each of the conversion tables, i.e., the relationship between the input video signals and the converted output video signal. As will be seen from this Figure, the 64 (sixty-four) levels of the input video signal are converted into levels 0 to 255 (00H to FFH) in accordance with the respective conversion tables. The change-over between the conversion tables can be made by varying the signal applied to upper terminals A6 and A7 of the ROM 12 as shown in Figs. 3A and 3B. The described embodiment is designed to allow this switching for each line, by the operation of a circuit 400 shown in Fig. 3A. In operation, the internal horizontal synchronizing signal (BD-Pulse) is input to a counter 401 the output of which is delivered through terminals QA and QB to the terminals A6 and A7 of the ROM 12. The counter 401, in cooperation with an RCO inverter 402 and a switch 403 constitutes a ring counter, so that the period of switching of the conversion table can be varied in accordance with the state of the switch 403. For instance, when the switch 403 has the state "1" (at terminal B), "1" (at terminal A), TABLE-4 is always selected, whereas, when the state of the switch 403 is "1" (at terminal B), "0" (at terminal A), TABLE-4 and TABLE-3 are selected alternately. When the switch 403 has the state of "0" (at terminal B), "0" (at terminal A), TABLE-1, TABLE-2, TABLE-3, and TABLE-4 are successively selected for successive lines, as shown in Fig. 10a. Moreover, it is possible to improve the gradation by changing the conversion table for successive lines.

In general, in the electrophotographic reproduction of an image, the gradation is more difficult to obtain in the light portion of the image than in the dark portion of the image. Therefore, as in the example shown in Fig. 9, the conversion tables are substantially duplicated in the dark portions of the image and differ in the light portion so as to provide optimal gradation.

In the preferred embodiment, the switching of the table can also be made in the direction of the main scan by the laser beam.

More specifically as shown in Figs. 3A and 3B, a signal can be formed by dividing the frequency of the screen clock (SCREEN-CLK) by 2 (two) by means of a J-K flip-flop circuit 404, inputting the resulting signal to one input terminal of an exclusive OR circuit 406, the other input of which is connected to terminal QB of the counter 401 and the output terminal of which is then connected to ROM 12 through a latch 11. With this arrangement, it is possible to change the conversion table in a staggered manner as shown in Fig. 10(b), thus attaining a further improvement in the gradation. A reference numeral 405 denotes a switch for selecting either switching of the table in the staggered manner described above or not so switching. The staggered switching of the table is selected when this switch has the "1" level and is not selected when the switch has the "0" level. The numerals appearing in frames of the table shown in Fig. 10(b) represent the numbers of the selected conversion tables 1 to 4. Thus, the period of the screen clock in the embodiment corresponds to the period of 3 (three) pixel clocks.

It will be understood from the description provided above that the scanning lines produced by the laser in accordance with data from the conversion tables of the ROM 12 are each generated as a succession of line segments. The line segments of successive scanning lines collectively form a plurality of columns that define a line screen.

More particularly, when the video signal processed by the circuit shown in Figs. 3A and 3B is directly delivered to a reproducing means such as a laser beam printer, the reproduced image has a structure with vertical columns (in the described embodiment, the line screen is composed of vertical columns of line segments of successive scanning lines which form in the reproduced image) due to the fact that the phase of the triangular wave signal is the same as that of the internal horizontal synchronizing signal (BD-Pulse) for each line. The circuit in the present embodiment is one in which the triangular wave is formed after the reference clocks are counted by 12 (twelve) from the rise of the BD-Pulse signal. The timing for the generation of triangular waves is the same for each line, and so each phase of the triangular waves on each line is the same. The image data is output from the digital data output device 1 as stated above. The digital data output device 1 outputs image data with a predetermined timing in synchronism with a signal equivalent to the BD-Pulse signal. More particularly, the data output device 1 is adapted to receive the BD signal. This device 1 starts to count the reference clock after receiving the BD signal, and begins transmission of the image data after counting the reference clocks up to a predetermined number. As a consequence, the timing of transfer of the image data necessary for image reproduction is the same on each line, and a high quality reproduced image with no image jitter can be produced. As the timing of the generation of the triangular waves and the timing of transfer of the image data necessary for image reproduction have the same relation on all of the lines, the reproduced image has its vertical column structure with no image jitter, which is effective, for example, in reducing a particular Moire pattern. Again this vertical column structure comprises a line screen having a vertical columnar axis extending at an angle, that is perpendicular to the raster scanning lines.

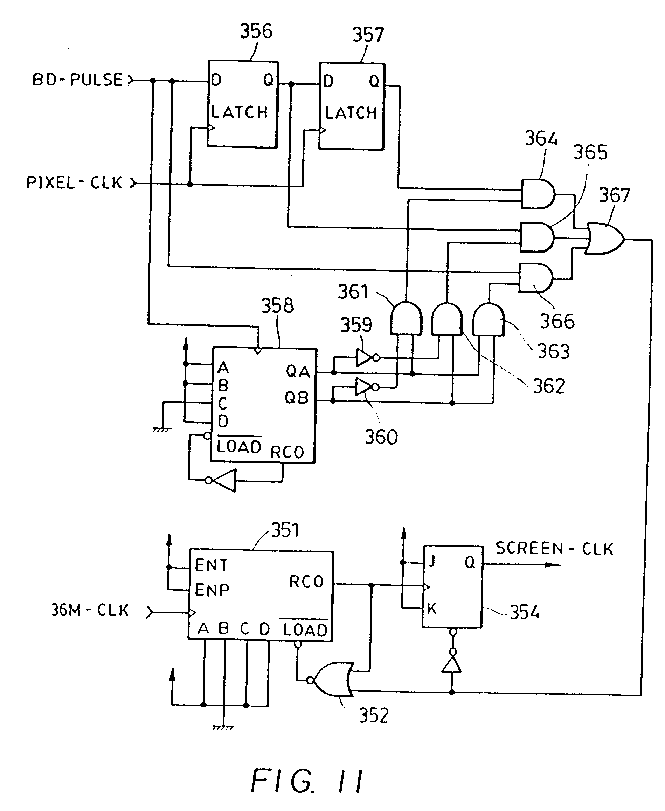

It is also possible to obtain a reproduced image having a structure comprising oblique line screen columns, if the phase of the triangular wave signals is made to be offset slightly for successive lines. This is effective in reducing the Moire pattern which appears undesirably when an original dot image is read and processed. The angle of inclination of the oblique columns can be determined as desired by suitably selecting the amount of shift of the phase of the screen clocks for successive lines. For instance, a reproduced image comprising scanning lines having oblique columns inclined at 45 degrees can be obtained by shifting the triangular wave signal by an amount corresponding to one picture element, i.e., by phase shifting the triangular wave signal 120 degrees for each of the successive columns. Fig. 11 shows a circuit for reproducing an image comprising oblique columns. More specifically, a reproduced image comprising oblique columns can be obtained by using this circuit in place of the screen clock generating circuit 300 in the circuit shown in Fig. 3.

Referring again to Fig. 11, the internal horizontal synchronizing signal (BD-Pulse) is latched by the pixel clocks (PIXEL-CLK) by means of D latches 356 and 357, so that three internal horizontal synchronizing signals (BD-Pulse) having different phases are produced. Then, one of these three internal horizontal synchronizing signals (BD-Pulse) is selected for each line by operation of a counter 358, inverters 359 and 360, and gate circuits 361 to 367. The selected signal is input as a LOAD signal to a counter 351, thereby changing the phase of the screen clocks for successive lines. The counter 351 is adapted to divide the frequency of the signal (36M-CLK) into 1/3, while the J-K flip-flop circuit 354 further divides the frequency of the output from the counter 351 into 1/2. With this arrangement, it is possible to generate one screen clock for every three picture elements.

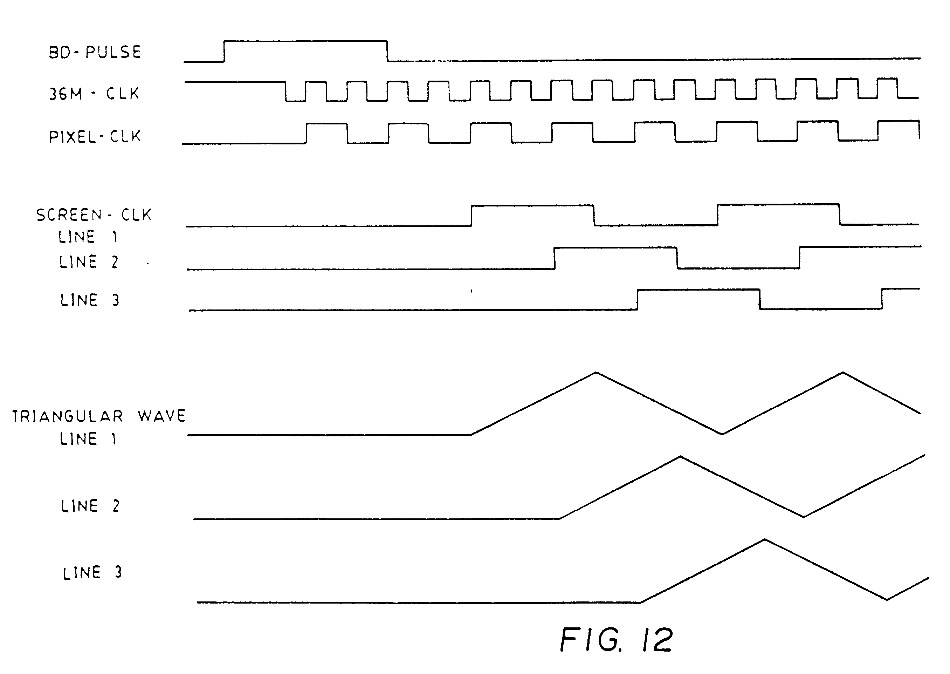

Fig. 12 shows timing of the screen clock generated by the circuit of Fig. 11 and the triangular wave signal for successive lines. These three triangular wave signals are generated in sequence of each set of each 3 lines.

When the reference pattern signal is generated in synchronism with a group of picture elements as in the case of the embodiment described, it is possible to shift the synchronizing signal used in the generation of the pattern signal by an amount corresponding to one half of the reference pattern signal period for each successive set of scan lines equal to the width of the pattern signal. Such a method allows the position of the center of growth of the pulse width to be shifted in each of successive lines, so that the output image can have an appearance resembling that produced by half-tone dots arranged along oblique lines.

In the circuit shown in Figs. 3A and 3B, the ROM 12 is used for the purpose of gamma conversion. This, however, is not the only element suitable for this purpose and the ROM 12 may be replaced by an S-RAM connected to the DATA BUS line of a computer. With such an arrangement, it is possible to rewrite the gamma conversion table as desired in accordance with, for example, a change in the kind of the original, thus increasing the adaptability of the apparatus of the invention.

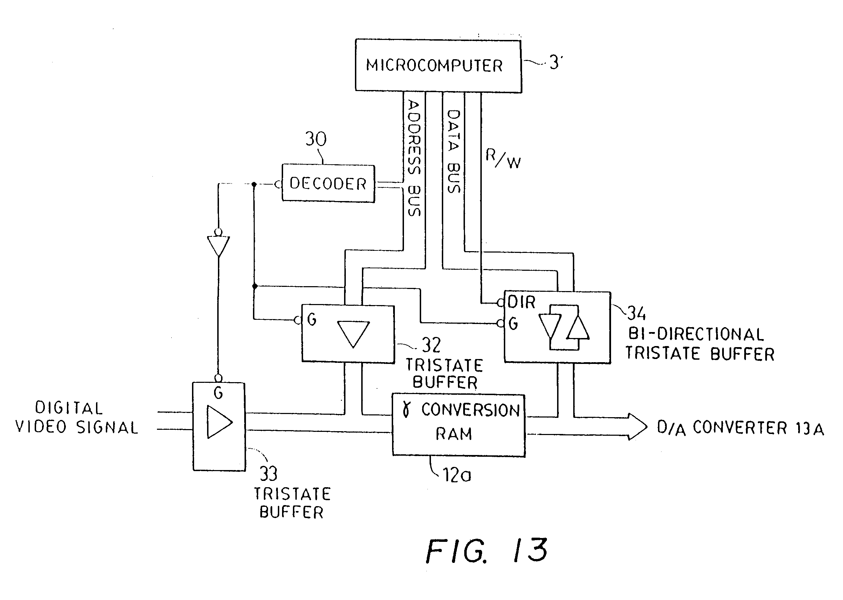

Fig. 13 shows an example of a circuit which is usable in place of the ROM 12 in the circuit shown in Figs. 3A and 3B. This circuit has, as will be seen from this Figure, an S-RAM 12a for gamma conversion, a decoder 30, a microcomputer 31 for rewriting the gamma conversion tables, tri-state buffers 32 and 33, and a bi-directional tri-state buffer 34.

The mode changing switches 304, 403 and 405 in the circuit shown in Figs. 3A and 3B may be controlled by the microcomputer 31 so as to increase the flexibility of the system as a whole.

## Claims

1. Apparatus for processing image data, including means for generating a pulse modulated signal for a print engine (8) arranged to generate a series of successive scan lines, comprising
pulse generating means (2, 3, 4) for generating a pulse width modulated signal by comparing a video signal (F) with a periodically varying signal (G); characterised in that
said pulse generating means generates a pulse width modulated signal having predetermined non-zero pulse periods and zero pulse periods, said periods being of non-zero duration, when said digital input signal representing the video signal (F) is either at its minimum value or at its maximum value.

2. Apparatus according to claim 1, wherein the pulse generating means includes means (3) for generating a reference analogue signal; digital to analogue conversion means (2) for converting the digital image data into an analogue signal; and comparision means (4) for comparing said converted data signal with said reference signal.

3. Apparatus according to claim 2, wherein said reference signal is substantially triangular.

4. Apparatus according to claim 2 or claim 3, wherein the peak to peak amplitude of the reference signal is larger than the peak to peak amplitude of the converted image data.

5. A method of processing image data to produce a pulse modulated signal for a print engine arranged to generate a series of successive scan lines; comprising the steps of
generating a pulse width modulated signal in response to a digital image data signal, wherein said digital image data signal ranges between minimum and maximum values; characterised in that
said pulse width modulated signal has predetermined non-zero pulse periods and zero pulse periods, said periods being of non-zero duration when said digital input data signal is either at its minimum value or at its maximum value.

6. A method according to claim 5, including generating a reference analogue signal; converting the digital image data into an analogue signal and comparing the converted data signal with the reference signal.

7. A method according to claim 6, wherein the reference signal is substantially triangular.

8. A method according to claim 6, wherein the peak to peak amplitude of the reference signal is larger than the peak to peak amplitude of the converted image data.

## Patentansprüche

1. Einrichtung zum Verarbeiten von Bilddaten, die eine Einrichtung zum Erzeugen eines impulsmodulierten Signals für ein Druckgerät (8) enthält, das zum Erzeugen einer Folge von aufeinanderfolgenden Abtastzeilen gestaltet ist,
mit einer Impulsgeneratoreinrichtung (2, 3, 4) zum Erzeugen eines impulsbreiten-modulierten Signals durch Vergleichen eines Videosignals (F) mit einem sich periodisch ändernden Signal (G),
dadurch gekennzeichnet, daß
die Impulsgeneratoreinrichtung ein impulsbreiten-moduliertes Signal erzeugt, das dann, wenn das das Videosignal (F) darstellende digitale Eingangssignal entweder auf seinem minimalen Wert oder auf seinem maximalen Wert liegt, vorbestimmte Perioden mit von null verschiedenen Impulsen und mit Nullimpulsen hat, wobei die Perioden eine von null verschiedene Dauer haben.

2. Einrichtung nach Anspruch 1, in der die Impulsgeneratoreinrichtung eine Einrichtung (3) zum Erzeugen eines analogen Bezugssignals, eine Digital/Analog-Wandlereinrichtung (2) zum Umsetzen der digitalen Bilddaten in ein analoges Signal und eine Vergleichseinrichtung (4) zum Vergleichen des umgesetzten Datensignals mit dem Bezugssignal aufweist.

3. Einrichtung nach Anspruch 2, bei der das Bezugssignal im wesentlichen dreieckig ist.

4. Einrichtung nach Anspruch 2 oder 3, in der die Spitze/Spitze-Amplitude des Bezugssignals größer als die Spitze/Spitze-Amplitude der umgesetzten Bilddaten ist.

5. Verfahren zum Aufbereiten von Bilddaten für das Erzeugen eines impulsmodulierten Signals für ein Druckgerät, das zum Erzeugen einer Folge von aufeinanderfolgenden Abtastzeilen gestaltet ist, mit Schritten zum
Erzeugen eines impulsbreiten-modulierten Signals im Ansprechen auf ein digitales Bilddatensignal, welches in einem Bereich zwischen einem minimalen Wert und einem maximalen Wert liegt,
dadurch gekennzeichnet, daß
das impulsbreiten-modulierte Signal dann, wenn das digitale eingegebene Datensignal entweder seinen minimalen Wert oder seinen maximalen wert annimmt, vorbestimmte Perioden mit von null verschiedenen Impulsen und mit Nullimpulsen hat, wobei die Perioden eine von null verschiedene Dauer haben.

6. Verfahren nach Anspruch 5, das das Erzeugen eines analogen Bezugssignals, das Umsetzen der digitalen Bilddaten in ein analoges Signal und das Vergleichen des umgesetzten Datensignals mit dem Bezugssignal umfaßt.

7. Verfahren nach Anspruch 6, dadurch gekennzeichnet, daß das Bezugssignal im wesentlichen dreieckförmig ist.

8. Verfahren nach Anspruch 6, bei dem die Spitze/Spitze-Amplitude des Bezugssignals größer als die Spitze/Spitze-Amplitude der umgesetzten Bilddaten ist.

## Revendications

1. Appareil de traitement de données d'image, comprenant des moyens pour produire un signal en modulation d'impulsions pour une machine d'impression (8) conçue de façon à produire une série de lignes de balayage successives, comprenant
des moyens de génération d'impulsions (2, 3, 4) destinés à produire un signal en modulation d'impulsions en largeur, en comparant un signal vidéo (F) avec un signal variant périodiquement (G);
caractérisé en ce que
les moyens de génération d'impulsions produisent un signal en modulation d'impulsions en largeur ayant des périodes d'impulsions prédéterminées de valeur différente de zéro et des périodes d'impulsions prédéterminées de valeur égale à zéro, ces périodes ayant une durée différente de zéro, lorsque le signal d'entrée numérique représentant le signal vidéo (F) est soit à sa valeur minimale, soit à sa valeur maximale.

2. Appareil selon la revendication 1, dans lequel les moyens de génération d'impulsions comprennent des moyens (3) qui sont destinés à produire un signal analogique de référence; des moyens de conversion numérique-analogique (2) qui sont destinés à convertir les données d'image numériques en un signal analogique; et des moyens de comparaison (4) qui sont destinés à comparer le signal de données converties avec le signal de référence.

3. Appareil selon la revendication 2, dans lequel le signal de référence est pratiquement triangulaire.

4. Appareil selon la revendication 2 ou la revendication 3, dans lequel l'amplitude crête-à-crête du signal de référence est supérieure à l'amplitude crête-à-crête des données d'image converties.

5. Un procédé de traitement de données d'image, pour produire un signal en modulation par impulsions pour une machine d'impression qui est conçue de façon à produire une série de lignes de balayage successives; comprenant les étapes suivantes :
on génère un signal en modulation d'impulsions en largeur, sous la dépendance d'un signal de données d'image numériques, ce signal de données d'image numériques étant compris entre des valeurs minimale et maximale;
caractérisé en ce que
le signal en modulation d'impulsions en largeur a des périodes d'impulsions prédéterminées de valeur différente de zéro et des périodes d'impulsions prédéterminées de valeur égale à zéro, ces périodes ayant une durée différente de zéro, lorsque le signal de données d'entrée numériques est soit à sa valeur minimale, soit à sa valeur maximale.

6. Un procédé selon la revendication 5, comprenant la génération d'un signal analogique de référence; la conversion des données d'image numériques en un signal analogique et la comparaison du signal de données converties avec le signal de référence.

7. Un procédé selon la revendication 6, dans lequel le signal de référence est pratiquement triangulaire.

8. Un procédé selon la revendication 6, dans lequel l'amplitude crête-à-crête du signal de référence est supérieure à l'amplitude crête-à-crête des données d'image converties.
